Europäisches Patentamt

European Patent Office

Office européen des brevets

(11) Veröffentlichungsnummer: **0 075 105**
**B1**

(19)

(12) # EUROPÄISCHE PATENTSCHRIFT

(45) Veröffentlichungstag der Patentschrift:
**19.06.85**

(21) Anmeldenummer: **82107312.9**

(22) Anmeldetag: **12.08.82**

(51) Int. Cl.⁴: **B 60 T 17/00,** B 60 T 15/36,
B 01 D 53/26

(54) Einrichtung mit einem Lufttrockner für Druckluftanlagen.

(30) Priorität: 08.04.82 DE 3213236
17.09.81 DE 3136973

(43) Veröffentlichungstag der Anmeldung:
30.03.83 Patentblatt 83/13

(45) Bekanntmachung des Hinweises auf die Patenterteilung:
19.06.85 Patentblatt 85/25

(84) Benannte Vertragsstaaten:
AT CH DE FR GB IT LI SE

(56) Entgegenhaltungen:
FR - A - 2 081 005
FR - A - 2 117 049
GB - A - 1 136 052
JP - A - 56 133 015

(73) Patentinhaber: WABCO Westinghouse
Fahrzeugbremsen GmbH, Am Lindener
Hafen 21 Postfach 91 12 80, D-3000 Hannover 91 (DE)

(72) Erfinder: Frania, Josef, An der Bauerwiese 10 d,
D-3000 Hannover (DE)
Erfinder: Vanselow, Jörg, Am Rehrkamp 20,
D-3003 Ronnenberg (DE)
Erfinder: Bornhof, Hans-Ulrich, Kieblitzrain 3,
D-3006 Burgwedel 1 (DE)

(74) Vertreter: Schrödter, Manfred, WABCO Westinghouse
Fahrzeugbremsen GmbH Am Lindener
Hafen 21 Postfach 91 12 80, D-3000 Hannover 91 (DE)

## Beschreibung

Die Erfindung betrifft eine Einrichtung mit einem Lufttrockner für Druckluftanlagen, insbesondere für Druckluft-Bremsanlagen, gemäß dem Oberbegriff des Anspruchs 1.

Eine aus einem Lufttrockner und einer Schalt- und Steuereinrichtung bestehende Einrichtung dieser Art, ist durch die DE-U-8 008 352 vorbekannt, wobei diese bekannte Einrichtung in einer aus einem Drucklufterzeuger (Luftpresser), einem Druckluftspeicher (Vorratsbehälter) und einem Druckregler bestehenden Druckluftanlage in die vom Luftpresser zum Vorratsbehälter führenden Rohrleitungen angeordnet ist.

Zur Regeneration des Trockengranulates im Lufttrockner wird bei dieser bekannten Einrichtung während der Abschaltphase des Druckreglers ein Teil der während der Lastphase getrockneten Luft im entspannten Zustand durch das Granulat ins Freie geleitet. Diese Luftmenge darf nicht zu gering sein, da sonst das Granulat nicht ausreichend regeneriert wird. Andererseits sollte diese Luftmenge jedoch nicht zu groß sein, da sonst die Einschaltdauer des Luftpressers zu groß wäre.

Zur Lösung dieses Problems enthält die Schalt- und Steuereinrichtung der erwähnten Einrichtung ein von einer Düse überbrücktes Rückschlagventil sowie einen als Zweipunktregler für die Umschaltzeitpunkte ausgebildeten Druckwächter, wobei in der Leitung der das Rückschlagventil überbrückenden Düse ein Absperrventil angeordnet ist, dessen Steuerzeitspanne mittels einer pneumatischen Verzögerungseinrichtung steuerbar ist.

Die in Zeitspannen gemessenen Einschaltungen des Trockenvorganges bzw. des Ausblasens des Kondensates aus dem Trockenmittel erfordern, z. B. bei Fahrzeugen mit Druckluft-Bremsanlagen, den verschiedenen Fahrzeugtypen bzw. den verschiedenen Einsatzbedingungen der Fahrzeuge angepaßte Abwandlungen von Einrichtungen mit Lufttrocknern, beispielsweise infolge unterschiedlicher Betriebsdrücke in den Druckluftanlagen oder unterschiedlicher Volumina der Druckluftbehälter.

Bei Fahrzeugen, welche sowohl für den Solobetrieb als auch für den Anhängerbetrieb eingesetzt werden, muß die bekannte Einrichtung mit dem Lufttrockner, d. h. insbesondere die Zeitregelung für den ungünstigsten Fall ausgelegt sein, was bei allen anderen Fällen zu einem zu großen Luftverbrauch führt. Ein weiteres Problem bei dieser Einrichtung entsteht durch die Verwendung der Düse, da eine genaue Einstellung der Zeitspanne nur mit einer kleinen Düse realisierbar ist, was jedoch die große Gefahr einer Verstopfung durch Schmutzteilchen in sich birgt.

Der Erfindung liegt deshalb die Aufgabe zugrunde, eine Einrichtung der eingangs erwähnten Art zu schaffen, welche für alle Einsatzbedingungen verwendbar ist, so daß die Herstellung von mehreren Abwandlungen entfällt. Die Einrichtung soll außerdem unempfindlich gegen Verschmutzung sein.

Diese Aufgabe wird durch die im Patentanspruch 1 aufgeführte Erfindung gelöst.

Im Moment des Umschaltens des Kompressors von Last- auf Leerlauf durch den Druckregler beginnt sofort das Regenerieren des Trockengranulates durch Rückströmen von getrockneter Luft aus der Fahrzeugkesselanlage. Dieses Rückströmen dauert so lange, bis der Druck in der Anlage um einen bestimmten — zum Trocknen des Granulates erforderlichen — vorgegebenen Wert abgefallen ist. Die Druckspanne ist dabei unabhängig von dem Kesselvolumen der Fahrzeuganlage und deshalb spielt es keine Rolle, ob das Fahrzeug im Solo- oder Anhängerbetrieb eingesetzt wird. Die gewünschte Druckabsenkung wird bei der erfindungsgemäßen Einrichtung durch Vorgabe einer sich zwischen zwei durch Rückschlagventile verbundenen Kammern einstellenden Druckdifferenz erreicht. Durch die Anordnung der Rückschlagventile wird erreicht, daß Änderungen in der Abschalthöhe des Druckreglers keinen Einfluß auf die Druckabsenkung haben.

Der Druckregler kann in der Leitung von Luftpresser zum Verbraucher (Druckreglerprinzip) oder parallel zu dieser Leitung (Governorprinzip) angeordnet sein. Vorteilhafte Weiterbildungen und Ausgestaltungen der Erfindung sind den Unteransprüchen zu entnehmen, wobei gemäß Unteranspruch 15 die Anordnung der erfindungsgemäßen Einrichtung in einem Anhängefahrzeug vorgesehen ist.

Die Erfindung wird nachfolgend an Hand von Ausführungsbeispielen, welche in der Zeichnung dargestellt sind, näher erläutert.

Es zeigt

Fig. 1 eine kolbengesteuerte Schalt- und Steuereinrichtung für einen Lufttrockner,

Fig. 2 ein Einbauschema der Schalt- und Steuereinrichtung gemäß Fig. 1 (Anlage mit Druckregler),

Fig. 3 wie Fig. 2, jedoch Einbau der Schalt- und Steuereinrichtung in einer Parallelleitung,

Fig. 4 wie Fig. 2 (Anlage mit einem Druckregler),

Fig. 5 eine Anlagen-Kombination der Anlagen gemäß der Fig. 3 und 4,

Fig. 6 eine membrangesteuerte Schalt- und Steuereinrichtung für einen Lufttrockner mit Steueranschluß für einen Druckregler nach dem Druckregler — oder dem Governorprinzip.

Fig. 7 ein Einbauschema der Schalt- udn Steuereinrichtung gemäß Fig. 6,

Fig. 8 eine an einen Druckregler angeflanschte membrangesteuerte Schalt- und Steuereinrichtung für einen Lufttrockner,

Fig. 9 ein Einbauschema der Schalt- und Steuereinrichtung gemäß Fig. 8 und

Fig. 10 ein Einbauschema der Schalt- und Steuereinrichtung gemäß Fig. 1 in einer Zweileitungs-Druckluftbremsanlage eines Anhängefahrzeugs.

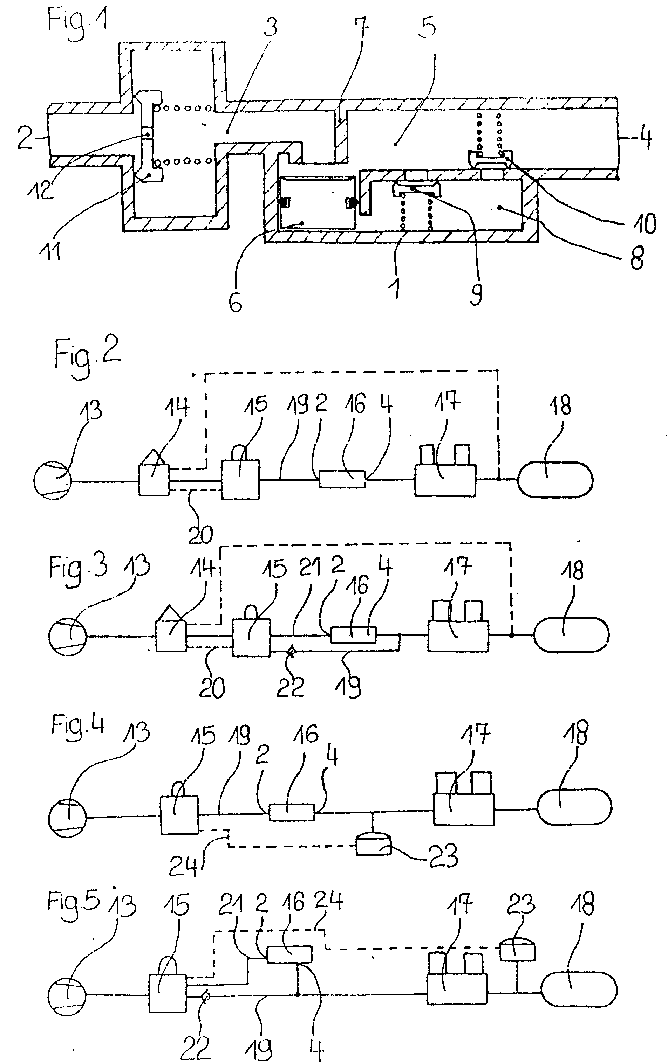

Die Fig. 1 stellt eine Schalt- und Steuereinrichtung für einen Lufttrockner dar, welche gemäß den in den Fig. 2, 3, 4 und 5 dargestellten Einbauschemata in der vom Lufttrockner zum Verbraucher führenden Leitung angeordnet ist. Das Gehäuse 1 der Schalt- und Steuereinrichtung verfügt über einen ersten Anschluß 2, der einerseits mit dem Lufttrockner und andererseits mit einer ersten Druckluftkammer 3 verbunden ist und über einen zweiten Anschluß 4 der einerseits mit dem Verbraucher und andererseits mit einer zweiten Druckluftkammer 5 in Verbindung steht. Zwischen der ersten Druckluftkammer 3 und der zweiten Druckluftkammer 5 ist ein von einem Ventilkolben 6 betätigbares Absperrventil 6, 7 angeordnet, wobei ein Gehäusesteg den Ventilsitz 7 bildet.

Der Ventilkolben 6 ist in Öffnungsrichtung des Absperrventils 6, 7 von dem Druck in der ersten Druckluftkammer 3 beaufschlagbar, während die Beaufschlagung des Ventilkolbens 6 in die Schließrichtung des Absperrventils 6, 7 von dem Druck einer Steuerkammer 8 beaufschlagbar ist. Die Steuerkammer 8 ist mit der zweiten Druckluftkammer 5 über ein erstes und ein zweites Rückschlagventil 9,10 derart verbunden, daß das erste Rückschlagventil 9 eine Verbindung von der zweiten Druckluftkammer 5 in die Steuerkammer 8 und das zweite Rückschlagventil 10 eine Verbindung von der Steuerkammer 8 in die zweite Druckluftkammer 5 herstellen.

Zwischen dem ersten Anschluß 2 und der ersten Druckluftkammer 3 ist ein sich in Richtung zweiter Anschluß 4 öffnendes drittes Rückschlagventil 11 mit einer Drosselbohrung 12 angeordnet.

Die Funktion der Schalt- und Steuereinrichtung gemäß Fig. 1 wird nachfolgend unter Hinzuziehung des in Fig. 2 dargestellten Einbauschemas wie folgt beschrieben.

Die vom Luftpresser 13 geförderte Druckluft strömt über einen Druckregler 14, einen Lufttrockner 15, die Anschlüsse 2 und 4 der Schalt- und Steuereinrichtung 16 und über ein Mehrkreisschutzventil 17 in einen Vorratsbehälter 18. Die Schalt- und Steuereinrichtung 16 ist bei diesem Ausführungsbeispiel in die Hauptleitung 19 geschaltet. Das Rückschlagventil 11 und der Kolben 6 bzw. das Ventil 6, 7 sind während des Lastlaufes des Luftpressers 13 in Offenstellung. Über das erste Rückschlagventil 9, welches einen bestimmten Rückhaltedruck hat (z. B. 0,3 bar) strömt dabei Luft von der zweiten Druckluftkammer 5 in die Steuerkammer 8.

In dem Moment, in dem der Druckregler 14 bei Erreichen eines vorgegebenen Behälterdruckes den Luftpresser 13 in nicht dargestellter Weise auf Leerlauf schaltet, wird vom Druckregler 14 über eine Leitung 20 im Lufttrockner 15 ein Ablaßventil geöffnet und die unter Druck stehende Luft im Vorratsbehälter 18 beginnt durch die Schalt- und Steuereinrichtung 16 hindurch zum Lufttrockner 15 zurückzuströmen. Beim Passieren der Drosselbohrung 12 im Rückschlagventil 11 entspannt die Luft und kann infolge ihres großen Volumens das Granulat trocknen (regenerieren). Dabei sinkt der Druck in der zweiten Druckluftkammer 5, während der Druck in der Steuerkammer 8 zunächst unverändert bleibt. In dem Moment, in dem der Druck in der zweiten Druckluftkammer 5 kleiner wird als der Druck in der Steuerkammer 8 schließt der Kolben 6 bzw. das Absperrventil 6, 7 und ein weiteres Zurückströmen von Druckluft aus dem Vorratsbehälter 18 zum Lufttrockner 15 ist unterbunden. Der Druck im Vorratsbehälter 18 sinkt nunmehr nur noch infolge Verbrauches durch die angeschlossenen Verbraucher (z. B. bei einer Bremsbetätigung).

Ab einer bestimmten Druckdifferenz zwischen der zweiten Druckluftkammer 5 und der Steuerkammer 8 (z. B. 0,2 bar) strömt Luft aus der Steuerkammer 8 durch das sich öffnende Rückschlagventil 10 in die zweite Druckluftkammer 5. Dadurch reduziert sich der Druck in der Steuerkammer 8, so daß beim nächsten Lastlauf eine Anpassung an einen evtl. geänderten Abschaltdruck des Druckreglers erfolgen kann. Nach dem Umschalten des Luftpressers 13 durch den Druckregler 14 auf Lastlauf wird über die Leitung 20 das erwähnte Ablaßventil im Lufttrockner 15 geschlossen.

Der dargestellte Kolben 6 kann auch ein Membrankolben sein.

Das Einbauschema gemäß Fig. 3 zeigt die Anordnung der Schalt- und Steuereinrichtung 16 gemäß Fig. 1 in einer parallel zur Hauptleitung 19 geführten Nebenleitung 21. Da hier nur ein Teilluftstrom das Gehäuse der Schalt- und Steuereinrichtung 16 durchströmt, kann die Nennweite des Durchflußquerschnittes kleiner gehalten werden. Bei dieser Anlage ist der Einbau eines Rückschlagventils 22 in der Hauptleitung 19 erforderlich, um eine Rückströmung an der Schalt- und Steuereinrichtung 16 vorbei zu verhindern.

Das Einbauschema gemäß Fig. 4 stellt eine mittels eines Druckreglers (Governor) 23 über eine Leitung 24 geregelte Anlage dar, wobei die Schalt- und Steuereinrichtung 16 gemäß Fig. 1 in der Hauptleitung 19 angeordnet ist. Der Regler 23 bewirkt in nicht dargestellter Weise, daß der Luftpresser vom Druck in der Verbraucheranlage bzw. im Vorratsbehälter 18 gesteuert wird. Das in Fig. 5 dargestellte Einbauschema zeigt eine Anlage mit Druck-Regelung und mit einer in einer Nebenleitung 2 angeordneten Schalt- und Steuereinrichtung 16 gemäß Fig. 1. Bei dieser Anlage befindet sich der Regler 23 hinter dem Mehrkreis-Schutzventil 17, während in der Anlage gemäß Fig. 4 der Regler 23 vor das Mehrkreis-Schutzventil 17 geschaltet ist. Diese unterschiedliche Anordnung Im Verbraucherkreis der Anlage ist ohne Bedeutung.

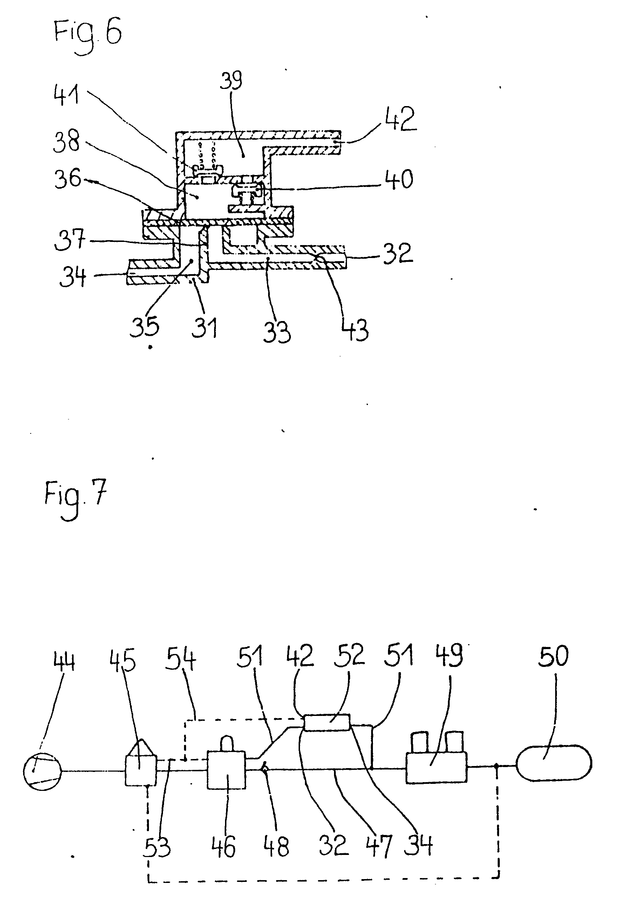

Die in Fig. 6 dargestellte Schalt- und Steuereinrichtung für einen Lufttrockner ist in dem in Fig. 7 dargestellten Einbauschema in einer vom Lufttrockner zum Verbraucher führenden Leitung angeordnet.

Das Gehäuse 31 der Schalt- und Steuereinrichtung verfügt über einen ersten Anschluß 32 der einerseits mit dem Lufttrockner und andererseits mit einer ersten Druckluftkammer 33 verbunden ist und über einen zweiten Anschluß 34 der einerseits mit dem Verbraucher und andererseits mit einer zweiten Druckluftkammer 35 in Verbindung steht. Zwischen der ersten Druckluftkammer 33 und der zweiten Druckluftkammer 35 ist ein von einem Membrankolben 36 betätigbares Absperrventil 36, 37 angeordnet, wobei ein Gehäusesteg den Ventilsitz 37 bildet.

Der Membrankolben 36 ist in Öffnungsrichtung des Absperrventils 36, 37 von dem Druck in der ersten Druckluftkammer 33 beaufschlagbar, während die Beaufschlagung des Membrankolbens in die Schließrichtung des Absperrventils 36, 37 von dem Druck einer ersten Steuerkammer 38 beaufschlagbar ist. Die erste Steuerkammer 38 ist mit einer zweiten Steuerkammer 39 über ein erstes und ein zweites Rückschlagventil 40 und 41 derart verbunden, daß das erste Rückschlagventil 40 eine Verbindung von der zweiten Steuerkammer 39 in die erste Steuerkammer 38 und das zweite Rückschlagventil 41 eine Verbindung von der ersten Steuerkammer 38 in die zweite Steuerkammer 39 herstellen, wobei die zweite Steuerkammer 39 einen dritten Anschluß 42 besitzt.

Zwischen dem ersten Anschluß 32 und der ersten Druckluftkammer 33 ist eine Drossel 43 angeordnet.

Die Funktion der Schalt- und Steuereinrichtung gemäß Fig. 6 wird nachfolgend unter Hinzuziehung des in Fig. 7 dargestellten Einbauschemas wie folgt beschrieben.

Die vom Luftpresser 44 geförderte Druckluft strömt über einen Druckregler 45, einen Lufttrockner 46, ein in die Hauptleitung 47 geschaltetes Rückschlagventil 48 und über ein Mehrkreis-Schutzventil 49 in einen Vorratsbehälter 50. Über eine Nebenleitung 51, welche parallel zu der den Lufttrockner 46 und das Schutzventil 49 verbindenden Hauptleitung 47 verläuft, strömt gleichzeitig ein Teilluftstrom durch die Schalt- und Steuereinrichtung 52, deren Absperrventil 36, 37 sich in Offenstellung befindet. Die Offenstellung des Absperrventils 36, 37 ist dadurch sichergestellt, daß der Druck oberhalb des Membrankolbens 36 niedriger ist, als der Druck der geförderten Luft unterhalb des Membrankolbens 36.

In dem Moment, in dem der Druckregler 45 auf Leerlauf schaltet, bekommt das Ablaßventil des Lufttrockners 46 über eine Leitung 53 einen Öffnungsimpuls.

Die Druckluft strömt nunmehr, sich über die Drossel 43 entspannend, zum Lufttrockner 46 zurück, regeneriert beim Durchströmen das Trocknungsgranulat und tritt über das Ablaßventil ins Freie.

Gleichzeitig mit dem Öffnen des Ablaßventils des Lufttrockners 46 gelangt der entsprechende Öffnungsimpuls über eine Leitung 54 und den dritten Anschluß 42 der Schalt- und Steuereinrichtung 52 in deren zweite Steuerkammer 39.

Dieser in der zweiten Steuerkammer 39 sich aufbauende Druck öffnet das erste Rückschlagventil 40 und Luft strömt in die erste Steuerkammer 38. Da das Rückschlagventil 40 einen bestimmten Rückhaltedruck (z. B. 0,3 bar) hat, herrscht diese Druckdifferenz nunmehr zwischen der ersten Druckluftkammer 33 und der ersten Steuerkammer 38, so daß die Luft aus der zweiten Druckluftkammer 35 in die erste Druckluftkammer 33 und weiter zum Lufttrockner 46 solange zurückströmen kann, bis ein Druckgleichgewicht zwischen den Druckluftkammern 33, 35 und der ersten Steuerkammer 38 herrscht und der Membrankolben 36 auf der Ventilsitz 37 aufsetzt. Der Rückhaltedruck des zweiten Rückschlagventils 41 muß mindestens so groß sein, daß erst Luft von der ersten Steuerkammer 38 in die zweite Steuerkammer 39 zurückströmt, wenn der Membrankolben 36 das Absperrventil 36, 37 exakt abgedichtet hat.

Da die zweite Steuerkammer 39 beim Umschalten des Druckreglers auf Lastlauf bis auf 0 bar entlüftet wird, kann der Rückhaltedruck des zweiten Rückschlagventiles 41 relativ hoch gewählt werden, wodurch die Gefahr von Undichtigkeiten an diesem Ventil vermieden wird.

In dem Augenblick, in dem der Druckregler 45 wieder auf Lastlauf umschaltet, wird die Leitung 54 zum Anschluß 42 drucklos und der Druck in der ersten Steuerkammer 38 sinkt durch Überströmen der Luft durch das zweite Rückschlagventil 41. Dadurch erfolgt automatisch eine Anpassung an einen evtl. geänderten Abschaltdruck des Druckreglers.

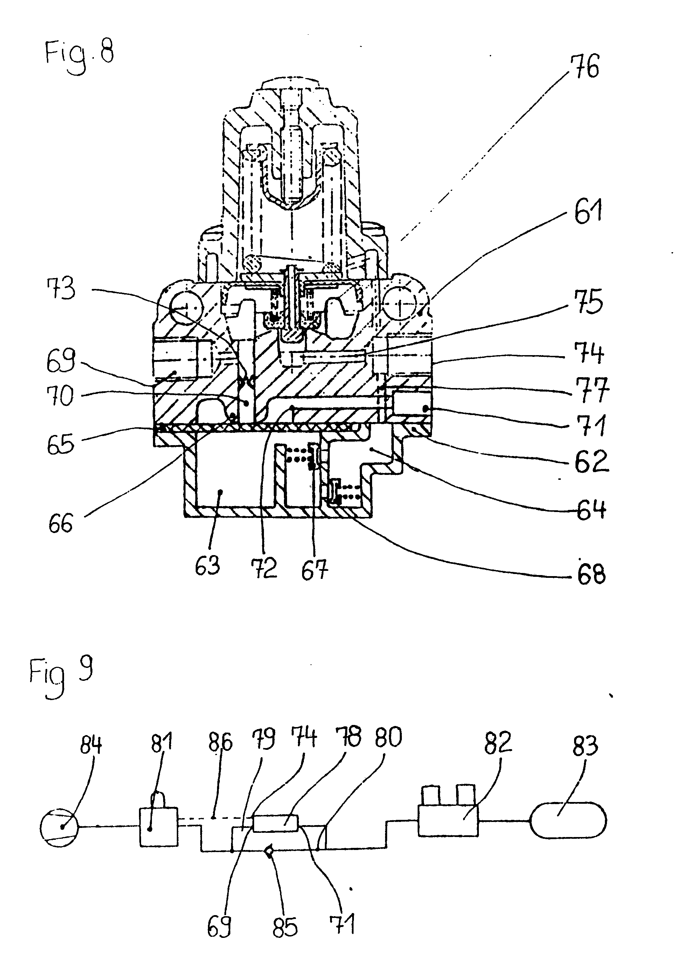

Das in Fig. 8 dargestellte Ausführungsbeispiel zeigt eine Schalt- und Steuereinrichtung, welche mit einem Druckregler (Governor) eine Baueinheit bildet.

Es ist zu erkennen, daß in dieser Baueinheit in einem an das Gehäuse 61 des Reglers angeflanschten Gehäuse 62 eine erste Steuerkammer 63 und eine zweite Steuerkammer 64 angeordnet sind, wobei ein Membrankolben 65 zwischen den beiden Gehäusen 61 und 62 liegt. Dieser Membrankolben 65 bildet mit einem Gehäusesteg 66 des Gehäuses 61 das Absperrventil 65, 66. Die Verbindung der beiden Steuerkammern 63 und 64 wird auch hier mittels eines ersten, in die erste Steuerkammer 63 öffnenden Rückschlagventils 67 und mittels eines zweiten, in die zweite Steuerkammer 64 öffnenden Rückschlagventils 68 hergestellt.

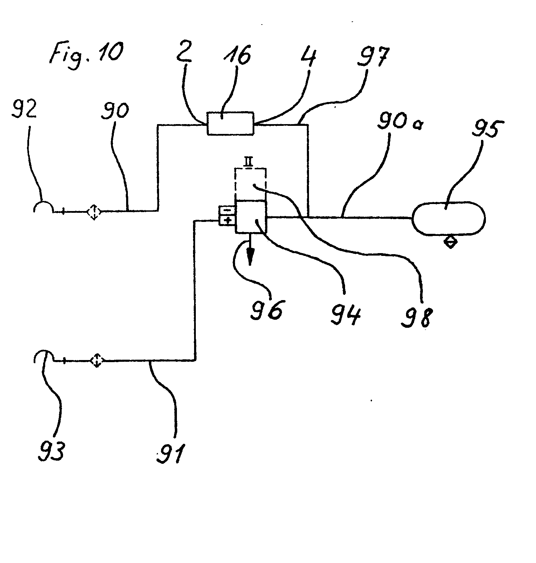

Das Gehäuse 61 verfügt über einen ersten Anschluß 69, der einerseits gemäß Fig. 9 und 10 mit dem Lufttrockner und andererseits mit einer ersten Druckluftkammer 70 verbunden ist und über einen zweiten Anschluß 71, der einerseits mit dem Verbraucher und andererseits mit einer zweiten Druckluftkammer 72 in Verbindung steht. Das Absperrventil 65, 66 befindet sich auch in dieser Baueinheit zwischen der ersten und der zweiten Druckluftkammer 70 und 72. Zwischen dem ersten Anschluß 69 und der ersten Druckluftkammer 70 ist eine Drossel 73 angeordnet.

Der Membrankolben 65 ist in Öffnungsrichtung des Absperrventils 65, 66 von dem Druck in den Druckluftkammern 70, 72 beaufschlagbar, während die Beaufschlagung des Membrankolbens 65 in Schließrichtung des Absperrventils 65, 66 von dem Druck der ersten Steuerkammer 63 beaufschlagbar ist.

Ein dritter Anschluß 74 des Gehäuses 61 ist einerseits über eine Gehäusebohrung 75 mit dem Abschaltventil 76 des Reglers verbunden und steht andererseits über eine Gehäusebohrung 77 mit der zweiten Steuerkammer 64 in Verbindung.

Im Einbauschema gemäß Fig. 9 ist die Baueinheit Druckregler(Governor)/Schalt- und Steuereinrichtung mit der Pos. 78 gekennzeichnet. Die Baueinheit 78 ist in diesem Ausführungsbeispiel in eine Nebenleitung 79 zur Hauptleitung 80 zwischen den Lufttrockner 81 und das Mehrkreisschutzventil 82 und den damit verbundenen Vorratsbehälter 83 geschaltet. Eine Steuerleitung 86 verbindet den dritten Anschluß 74 der Baueinheit 78 mit dem Lufttrockner 81. Zur Vervollständigung des Einbauschemas seien noch der Luftpresser 84 und das Rückschlagventil 85 der Hauptleitung 80 erwähnt.

Während des Lastlaufes des Luftpressers 84 ist der Druck in der ersten Steuerkammer 63 geringer als der Druck in den Druckluftkammern 70, 72 und die Luft kann über den ersten Anschluß 69, die Drossel 73, das Absperrventil 65, 66 und den zweiten Anschluß 71 ungehindert strömen. Im Moment des Abschaltens des Reglers wird über die Bohrung 75 und den dritten Anschluß 74 ein Druckimpuls zum Lufttrockner 81 zwecks Öffnung dessen Ablaßventils geleitet, wobei über die Gehäusebohrung 77 dieser Druckimpuls einen Druck in der zweiten Steuerkammer 64 aufbaut. Von der Kammer 64 strömt Luft über das erste Rückschlagventil 67 in die erste Steuerkammer 63.

Die weitere Funktion entspricht der gemäß Fig. 6 beschriebenen Weise.

Die Höhe des Rückhaltedruckes des ersten Rückschlagventiles 9, 40, 67 kann einstellbar ausgeführt werden, um die Möglichkeit zu schaffen, bei geänderten Umwelt- oder Betriebsbedingungen die Trockenwirkung, zwecks Erreichung eines tieferen Taupunktes der Nutzluft, zu verbessern.

Bei Fahrzeugen, deren Einsatz ständig im Anhängerbetrieb erfolgt oder deren gemeinsamer Einsatz extremen Bedingungen unterworfen ist und deren Folge ein über das normale Maß hinausgehender Druckluftverbrauch sein kann, besteht die Gefahr, daß das aus dem Vorratsbehälter des Zugfahrzeugs durch die Schalt- und Steuereinrichtung zurückströmende Trockenluftvolumen nicht ausreicht, um das Granulat des Lufttrockners zu regenerieren. Eine Erhöhung der Druckdifferenz zwischen den beiden Kammern der Schalt- und Steuereinrichtung wäre erforderlich. Dies führte jedoch zu einer unzulässigen Erhöhung des Luftverbrauches bzw. des Druckabfalls in dem Vorratsbehälter.

In diesem Falle kann in vorteilhafter Weise die erfindungsgemäße Schalt- und Steuereinrichtung auch in der Anhänger-Bremsanlage angeordnet werden, so daß zur Regenerierung des Granulates des im Zugfahrzeug eingebauten Lufttrockners zusätzlich ein Trockenluftanteil aus dem Vorratsbehälter des Anhängefahrzeuges entnommen werden kann.

Gemäß Fig. 10 ist die Zweileitungs-Druckluftbremsanlage eines Anhängefahrzeugs mit einer Anhänger-Vorratsleitung 90, 90a und einer Anhänger-Bremsleitung 91 über Kupplungsköpfe 92 und 93 mit nicht dargestellten Kupplungsköpfen des Zugfahrzeugs mit der Zugfahrzeug-Bremsanlage verbunden. Die Anhänge-Vorratsleitung 90 führt über ein Anhänger-Bremsventil 94 zu einem Vorratsbehälter 95, wobei das Anhänger-Bremsventil 94 zur Betätigung der Radbremsen des Anhängefahrzeugs über einen Steueranschluß von Druckimpulsen in der Anhänger-Bremsleitung 91 steuerbar ist, indem durch die Druckimpulse eine Verbindung zwischen der vom Vorratsbehälter 95 zum Anhänger-Bremsventil 94 führenden Leitung 90a und einer vom Anhänger-Bremsventil 94 zu nicht dargestellten Radbremszylindern führenden Leitung 96 hergestellt wird.

Die hier wie in den Fig. 2 bis 5 mit der Positionszahl 16 bezeichnete Schalt- und Steuereinrichtung ist mit ihren Anschlüssen 2 und 4 in eine das Anhänger-Bremsventil 94 umgehende, parallel zur Vorratsleitung 90, 90a verlaufende Leitung 97 geschaltet. Die Einrichtung einer Umgehungsleitung 97 ist hier vorgesehen, weil das Anhänger-Bremsventil 94 Einrichtungen enthält, die ein Zurückströmen der Druckluft aus dem Vorratsbehälter 95 in die zur Anhänger-Vorratskupplung 92 führende Leitung 90 verhindern sollen.

Ein Rückschlagventil, dessen Anordnung im Zugfahrzeug bei einer in einer Parallelleitung angeordneten Schalt- und Steuereinrichtung in der Hauptleitung erforderlich ist, kann demnach im Anhängefahrzeug entfallen.

In dem dargestellten Ausführungsbeispiel verfügt das Anhänger-Bremsventil 94 über ein von Hand betätigbares Löseventil 98.

Im Moment des durch den Druckregler ausgelösten Umschaltens des Kompressors von Last- auf Leerlauf strömt Trockenluft nicht nur aus dem Vorratsbehälter des Zugfahrzeugs durch die Schalt- und Steuereinrichtung des Zugfahrzeugs zum Lufttrockner, sondern auch Trockenluft aus dem Vorratsbehälter 95 des Anhängefahrzeugs über die Umgehungsleitung 97, die Schalt- und Steuereinrichtung 16, die Vorratsleitung 90, die Anhänger-Vorratskupplung 92 und die im Zugfahrzeug weiter zum Lufttrockner verlaufende Leitungsverbindung der Zugfahrzeug-Bremsanlage.

Entsprechendes gilt auch bei Verwendung eines Anhängers mit Einleitungsbremse.

**Patentansprüche**

1. Einrichtung mit einem Lufttrockner für Druckluftanlagen, insbesondere für Druckluft-Bremsanlagen, welche folgende Merkmale umfaßt:

a) Der Lufttrockner dient zum Ausscheiden von Feuchtigkeit aus der verdichteten Luft, wobei Trockengranulate die ausgeschiedene Feuchtigkeit aufnehmen;

b) der Lufttrockner ist in die von einem Luftpresser zum Verbraucher (Vorratsbehälter) führende Leitung geschaltet;

c) zur Regenerierung der Trockengranulate wird Druckluft aus dem entwässerten Teil der Druckluftanlage entnommen;

d) es ist eine Schalt- und Steuereinrichtung vorgesehen, die die Entnahme der entwässerten Druckluft und die Regenerierung der Trockengranulate schaltet bzw. steuert,

wobei die Schalt- und Steuereinrichtung durch die folgenden Merkmale gekennzeichnet ist:

e) Es ist ein erster Anschluß (2, 32, 69) vorgesehen, der einerseits mit dem Lufttrockner (14, 45, 81) und andererseits mit einer ersten Druckluftkammer (3, 33, 70) verbunden ist,

f) es ist ein zweiter Anschluß (4, 34, 71) vorgesehen, der einerseits mit dem Verbraucher und andererseits mit einer zweiten Druckluftkammer (5, 35, 72) verbunden ist;

g) zwischen der ersten (3, 33, 70) und der zweiten Druckluftkammer (5, 35, 72) ist ein von einem Ventilkolben (6, 36, 65) betätigbares Absperrventil (6, 7; 36, 37; 65, 66) angeordnet;

h) der Ventilkolben (6, 36, 65) ist in Öffnungsrichtung des Absperrventils (6, 7; 36, 37; 65, 66) von dem Druck in der ersten Druckluftkammer (3, 33, 70) beaufschlagbar;

i) der Ventilkolben (6, 36, 65) ist in Schließrichtung des Absperrventils (6, 7; 36, 37; 65, 66) von dem Druck einer ersten Steuerkammer (8, 38, 63) beaufschlagbar, die zur Speicherung eines Vergleichsdruckes dient.

2. Einrichtung nach Anspruch 1, dadurch gekennzeichnet, daß die erste Steuerkammer (8) mit der zweiten Druckluftkammer (5) über ein zur ersten Steuerkammer (8) öffnendes erstes Rückschlagventil (9) verbunden ist.

3. Einrichtung nach Anspruch 1, dadurch gekennzeichnet, daß die erste Steuerkammer (8) mit der ersten Druckluftkammer (3) über ein zur ersten Steuerkammer (8) öffnendes erstes Rückschlagventil (9) verbunden ist.

4. Einrichtung nach Anspruch 2, dadurch gekennzeichnet, daß die erste Steuerkammer (8) mit der zweiten Druckluftkammer (5) über ein zur zweiten Druckluftkammer (5) sich öffnendes zweites Rückschlagventil (10) verbunden ist.

5. Einrichtung nach einem der vorhergehenden Ansprüche, gekennzeichnet durch folgende Merkmale:

a) Ein drittes Rückschlagventil (11) ist zwischen dem ersten Anschluß (2) und der ersten Druckluftkammer (3) angeordnet;

b) das dritte Rückschlagventil (11) enthält eine Drosselbohrung (12).

6. Einrichtung nach wenigstens einem der vorhergehenden Ansprüche, dadurch gekennzeichnet, daß der Ventilkolben des Absperrventils ein Membrankolben (36, 65) ist.

7. Einrichtung nach Anspruch 1, gekennzeichnet durch folgende Merkmale:

a) Die erste Steuerkammer (38, 63) ist mit einer zweiten Steuerkammer (39, 64) über ein zur ersten Steuerkammer (38, 63) öffnendes erstes Rückschlagventil (40, 67) verbunden;

b) die zweite Steuerkammer (39, 64) verfügt über einen dritten Gehäuseanschluß (42, 74) zwecks Verbindung mit einem Druckregler.

8. Einrichtung nach Anspruch 7, dadurch gekennzeichnet, daß die erste Steuerkammer (38, 63) mit der zweiten Steuerkammer (39, 64) über ein zur zweiten Steuerkammer (39, 64) öffnendes zweites Rückschlagventil (41, 68) verbunden ist.

9. Einrichtung nach Anspruch 7, dadurch gekennzeichnet, daß der Ventilkolben des Absperrventils (36, 37; 65, 66) ein Membrankolben (36, 65) ist.

10. Einrichtung nach Anspruch 7, dadurch gekennzeichnet, daß zwischen dem ersten Anschluß (32, 69) und der ersten Druckluftkammer (33, 70) eine Drossel (43, 73) angeordnet ist.

11. Einrichtung nach Anspruch 7, dadurch gekennzeichnet, daß der Druckregler und die Schalt- und Steuereinrichtung eine Baueinheit bilden.

12. Einrichtung nach einem der vorhergehenden Ansprüche, dadurch gekennzeichnet, daß die Schalt- und Steuereinrichtung (16, 52, 78) in der vom Lufttrockner (15, 46, 81) zum Verbraucher (18, 50, 83) führenden Hauptleitung (19, 47, 80) angeordnet ist.

13. Einrichtung nach einem der vorhergehenden Ansprüche, gekennzeichnet durch folgende Merkmale:

a) Die Schalt- und Steuereinrichtung (16, 52, 78) ist in einer parallel zur Hauptleitung (19, 47, 80) zwischen dem Lufttrockner (15, 46, 81) und Verbraucher (18, 50, 83) geführten Nebenleitung (21, 51, 79) angeordnet;

b) in die Hauptleitung (19, 47, 80) ist ein in Füllrichtung der Anlage öffnendes Rückschlagventil (22, 48, 85) angeordnet.

14. Einrichtung nach einem der vorhergehenden Ansprüche, dadurch gekennzeichnet, daß die Höhe des Rückhaltedruckes des ersten Rückschlagventiles (9, 40, 67) einstellbar ist.

15. Einrichtung nach einem der vorhergehenden Ansprüche, gekennzeichnet durch folgende Merkmale:

a) Das Schalt- und Steuerventil (16) ist in einer parallel zur Vorratsleitung (90, 90a) eines Anhängefahrzeugs verlaufenden Umgehungsleitung (97) angeordnet;

b) die Anhänger-Vorratsleitung (90, 90a) führt von einem mit der Vorratsleitung der Zugfahrzeug-Bremsanlage gekuppelten Vorrats-Kupplungskopf (92) zu einem Vorratsbehälter (95) des Anhängefahrzeugs;

c) in die Anhänger-Vorratsleitung (90, 90a) ist ein Anhänger-Bremsventil (94) geschaltet;

d) die parallel zur Vorratsleitung (90, 90a) verlaufende Umgehungsleitung (97) ist derart zwischen dem Vorratskupplungskopf (92) und dem Vorratsbehälter (95) angeordnet, daß das Anhänger-Bremsventil (94) von der Umgehungsleitung umgangen wird.

## Claims

1. Arrangement having an air-dryer for compressed-air systems, especially for pneumatic brake systems, which comprises the following features:

a) the air-dryer serves to extract moisture from the compressed air, drying, granules taking up the extracted moisture;

b) the air-dryer is connected in the line leading from one air compressor to the consumer (reservoir);

c) in order to regenerate the drying granules, compressed air is taken from that part of the compressed-air system from which the water has been removed;

d) an actuation and control device is provided which actuates and/or controls the removal of the dehydrated compressed air and the regeneration of the drying granules.

the actuation and control device being characterised by the following features:

e) a first connection (2, 32, 69) is provided which is connected on one side to the air-dryer (14, 45, 81) and on the other side to a first compressed-air chamber (3, 33, 70);

f) a second connection (4, 34, 71) is provided which is connected on one side to the consumer and on the other to a second compressed-air chamber (5, 35, 72);

g) between the first (3, 33, 70) and the second (5, 35, 72) compressed air chambers is a shut-off valve (6, 7; 36, 37; 65, 66) which can be operated by a valve piston (6, 36, 65);

h) the valve piston (6, 36, 65) can be subjected to the pressure in the first compressed-air chamber (3, 33, 70) in the opening direction of the shut-off valve (6, 7; 36, 37; 65, 66);

i) the valve piston (6, 36, 65) can be subjected to the pressure of a first control chamber (8, 38, 63) which serves to store a reference pressure, in the closing direction of the shut-off valve (6, 7; 36, 37; 65, 66).

2. Arrangement according to claim 1, characterised in that the first control chamber (8) is connected to the second compressed-air chamber (5) by way of a first nonreturn valve (9) which opens towards the first control chamber (8).

3. Arrangement according to claim 1, characterised in that the first control chamber (8) is connected to the first compressed-air chamber (3) by way of a first nonreturn valve (9) which opens towards the first control chamber (8).

4. Arrangement according to claim 2, characterised in that the first control chamber (8) is connected to the second compressed-air chamber (5) by way of a second nonreturn valve (10) which opens towards the second compressed-air chamber (5).

5. Arrangement according to at least one of the preceding claims, characterised by the following features:

a) a third non-return valve (11) is located between the first connection (2) and the first compresed-air chamber (3),

b) the third return valve (11) has a throttle hole (12).

6. Arrangement according to at least one of the preceding claims, characterised in that the valve piston of the shut-off valve is a membrane piston (36, 65).

7. Arrangement according to claim 1, characterised by the following features:

a) the first control chamber (38, 63) is connected to a second control chamber (39, 64) by way of a first nonreturn valve (40, 67) which opens towards the first control chamber (38, 63);

b) the second control chamber (39, 64) has access to a third housing connection (42, 74) for the purpose of connection to a pressure control device.

8. Arrangement according to claim 7, characterised in that the first control chamber (38, 63) is connected to the second control chamber (39, 64) by way of a second non-return valve (41, 68) which opens towards the second control chamber (39, 64).

9. Arrangement according to claim 7, characterised in that the valve piston of the shut-off valve (36, 37; 65, 66) is a membrane piston (36, 65).

10. Arrangement according to claim 7, characterised in that between the first connection (32, 69) and the first compressed-air chamber (33, 70) is located a throttle (43, 73).

11. Arrangement according to claim 7, characterised in that the pressure control device and the actuation and control device form a unit.

12. Arrangement according to any one of the preceding claims, characterised in that the actuation and control device (16, 52, 78) is located in the main line (19, 47, 80) leading from the air-dryer (15, 46, 81) to the consumer (18, 50, 83).

13. Arrangement according to any one of the preceding claims, characterised by the following features:

a) the actuation and control device (16, 52, 78) is located in a secondary line (21, 51, 79) which passes parallel to the main line (19, 47, 80) between the air-dryer (15, 46, 81) and the consumer (18, 50, 83);

b) located in the main line (19, 47, 80) is a non-return valve (22, 48, 85), which opens in the filling direction of the system.

14. Arrangement according to any one of the preceding claims, characterised in that the level of the retaining pressure of the first non-return valve (9, 40, 67) is adjustable.

15. Arrangement according to any one of the preceding claims, characterised by the following features:

a) the actuation and control valve (16) is located in a by-pass line (97) which extends parallel to the supply line (90, 90a) of a trailer;

b) the trailer-supply line (90, 90a) leads from a supply coupling head (92), which is coupled to the supply line of the towing vehicle brake system, to a reservoir (95) for the trailer;

c) a trailer brake valve (94) is connected in the trailer supply line (90, 90a);

d) the by-pass line (97) extending parallel to the supply line (90, 90a) is arranged between the supply coupling head (92) and the reservoir (95) in such a manner that the trailer brake valve (94) is by-passed by the by-pass line.

## Revendications

1. Dispositif comprenant un dessiccateur d'air destiné à des installations à air comprimé, en particulier à des freins à air comprimé, et ayant les particularités suivantes:

a) le dessiccateur sert à éliminer l'humidité de l'air comprimé, l'humidité éliminée étant absorbée par un produit desséchant sous forme de granulés;

b) le dessiccateur est monté dans une conduite menant d'un compresseur à l'utilisateur (réservoir);

c) de l'air comprimé est prélevé de la partie déshydratée de l'installation à air comprimé en vue de la régénération des granulés;

d) un dispositif de commutation et de commande est prévu pour produire les commutations et les commandes nécessaires au prélèvement de l'air comprimé déshydraté et à la régénération des granulés,

ce dispositif de commutation et de commande étant caractérisé en ce:

e) qu'il comprend un premier orifice de raccordement (2, 32, 69) relié d'un côté au dessiccateur (14, 45, 81) et de l'autre côté à une première chambre à air comprimé (3, 33, 70);

et

f) un second orifice de raccordement (4, 34, 71) qui est rélié d'un côté à l'utilisateur et de l'autre côté à une deuxième chambre à air comprimé (5, 35, 72);

g) qu'une soupape d'arrêt (6, 7; 36, 37; 65, 66) est disposée entre la première (3, 33, 70) et la deuxième chambre à air comprimé (5, 35, 72), cette soupape possédant un élément mobile de commande sous forme d'un piston (6, 36, 65) ou d'un élément analogue;

h) le piston (6, 36, 65) peut être chargé dans le sens de l'ouverture de la soupape d'arrêt (6, 7; 36, 37; 65, 66) par la pression dans la première chambre à air comprimé (3, 33, 70);

i) le piston (6, 36, 65) peut être chargé dans le sens de la fermeture de la soupape d'arrêt (6, 7; 36, 37; 65, 66) par la pression dans une première chambre de commande (8, 38, 63) qui sert à l'emmagasinage d'une pression de comparaison.

2. Dispositif selon la revendication 1, caractérisé en ce que la première chambre de commande (8) est reliée à la deuxième chambre à aire comprimé (5) à travers une première soupape anti-retour (9) s'ouvrant vers la première chambre de commande (8).

3. Dispositif selon la revendication 1, caractérisé en ce que la première chambre de commande (8) est reliée à la première chambre à air comprimé (3) à travers une première soupape anti-retour (9) s'ouvrant vers la première chambre de commande (8).

4. Dispositif selon la revendication 2, caractérisé en ce que la première chambre de commande (8) est reliée à la deuxième chambre à air comprimé (5) à travers une deuxième soupape anti-retour (10) s'ouvrant vers la deuxième chambre à air comprimé (5).

5. Dispositif selon au moins une des revendications précédentes, caractérisé en ce que:

a) une troisième soupape anti-retour (11) est disposée entre le premier orifice de raccordement (2) et la première cambre à air comprimé (3);

b) la troisième soupape anti-retour (11) contient un perçage (12) formant un étranglement.

6. Dispositif selon au moins une des revendications précédentes, caractérisé en ce que l'élément mobile de commande de la soupape d'arrêt est un diaphragma (36, 65).

7. Dispositif selon la revendication 1, caractérisé en ce que:

a) la première chambre de commande (38, 63) est reliée à une deuxième chambre de commande (39, 64) à travers une première soupape anti-retour (40, 67) s'ouvrant vers la première chambre de commande (38, 63);

b) la deuxième chambre de commande (39, 64) présente un troisième orifice de raccordement (42, 74), formé sur le corps, qui sert à l'établissement d'une liaison avec un régulateur de pression.

8. Dispositif selon la revendication 7, caractérisé en ce que la première chambre de commande (38, 63) est reliée à la deuxième chambre de commande (39, 64) à travers une deuxième soupape anti-retour (41, 68) s'ouvrant vers la deuxième chambre de commande (39, 64).

9. Dispositif selon la revendication 7, caractérisé en ce que l'élément mobile de commande de la soupape d'arrêt (36, 37; 65, 66) est un diaphragme (36, 65).

10. Dispositif selon la revendication 7, caractérisé en ce qu'un étranglement (43, 73) est disposé entre le premier orifice de raccordement (32, 69) et la première chambre à air comprimé (33, 70).

11. Dispositif selon la revendication 7, caractérisé en ce que le régulateur de pression et le dispositif de commutation et de commande forment une unité.

12. Dispositif selon une des revendications précédentes, caractérisé en ce que le dispositif de commutation et de commande (16, 52, 78) est disposé dans la conduite principale (19, 47, 80) menant du dessiccateur (15, 46, 81) à l'utilisateur (18, 50, 83).

13. Dispositif selon une des revendications précédentes, caractérisé en ce que:

a) le dispositif de commutation et de commande (16, 52, 78) est disposé dans une conduite annexe (21, 51, 79) passant parallèlement à la conduite principale (19, 47, 80) entre le dessiccateur (15, 46, 81) et l'utilisateur (18, 50, 83);

b) la conduite principale (19, 47, 80) contient une soupape antiretour (22, 48, 85) s'ouvrant dans le sens du remplissage de l'installation.

14. Dispositif selon une des revendications précédentes, caractérisé en ce que la pression de retenue de la première soupape anti-retour (9, 40, 67) est réglable.

15. Dispositif selon une des revendications précédentes, caractérisé en ce que:

a) le dispositif de commutation et de commande (16) est disposé dans une conduite de contournement (97) s'étendant parallèlement à la conduite d'alimentation (90, 90a) d'une remorque;

b) la conduite d'alimentation de remorque (90, 90a) mène d'une tête d'accouplement d'alimentation (92) accouplée à la conduite d'alimentation de l'installation de freinage du véhicule tracteur à un réservoir (95) de la remorque;

c) la conduite d'alimentation de la remorque (90, 90a) contient un robinet de frein de remorque (94);

d) la conduite de contournement (97) s'étendant parallèlement à la conduite d'alimentation (90, 90a) est disposée de telle manière entre la tête d'accouplement d'alimentation (92) et le réservoir (95) que le robinet de frein de remorque (94) soit contourné par la conduite de contournement.

0 075 105

**Fig. 1**

**Fig. 2**

**Fig. 3**

**Fig. 4**

**Fig. 5**

11

Fig. 6

Fig. 7

Fig. 8

76

61

73

75

74

77

71

69

70

65

66

62

64

68

63    72    67

Fig 9

84    81    86    79    74    78    80    82    83

69    85    71

Fig. 10